# FASCICULE DE BREVET EUROPEEN

(11) **EP 2 950 217 B1**
(45) Date de publication et mention de la délivrance du brevet: **04.05.2022**
(21) Numéro de dépôt: 15169315.7
(22) Date de dépôt: 27.05.2015
(51) Int. Cl.: G06F 12/0817, G06F 12/0831, G06F 12/0815

(54) **INTERROGATION SPÉCULATIVE EN MÉMOIRE CENTRALE D'UN SYSTÈME MULTIPROCESSEUR**
SPEKULATIVE SPEICHERABFRAGE EINES ZENTRALSPEICHERS EINES MULTIPROZESSORSYSTEMS
SPECULATIVE QUERY IN THE CENTRAL MEMORY OF A MULTIPROCESSOR SYSTEM

(30) Priorité: 27.05.2014 FR 1454792
(43) Date de publication de la demande: 02.12.2015
(73) Titulaire: BULL SAS, 78340 Les Clayes-sous-Bois (FR)
(72) Inventeur: Palfer-Sollier, Thibaut, 92120 Montrouge (FR); Chehaibar, Ghassan, 78280 Guyancourt (FR)
(74) Mandataire: Argyma

(56) Documents cités:
- EP-A1- 1 628 209
- EP-A2- 1 624 377
- WO-A1-00/36514
- US-A- 5 793 986
- US-A1- 2002 087 811
- US-A1- 2002 199 062
- None

## Description

La présente invention concerne la gestion de la mémoire cache dans les systèmes informatiques multiprocesseurs.

Dans de tels systèmes, chaque processeur dispose d'une mémoire cache propre pour stocker des données de calcul, par exemple des adresses mémoire pointant vers des instructions à exécuter. Les processeurs fonctionnant en parallèle, ils partagent certaines de ces données. Ainsi, plusieurs processeurs peuvent avoir accès à une même donnée en lecture ou en écriture pour éventuellement la modifier et ainsi exécuter un programme informatique.

Afin d'assurer la mise à jour des données utilisées par les processeurs, et éviter que deux processeurs traitent deux versions différentes d'une même donnée, des algorithmes de « cohérence de cache » sont mis en oeuvre. L'algorithme MESI est un exemple d'un tel algorithme.

La mise en oeuvre d'algorithmes de cohérence de cache nécessite un grand nombre de communications entre les processeurs pour leur permettre de connaître à chaque instant, la localisation d'une donnée. Il s'agit de déterminer l'identification de la mémoire cache dans laquelle elle se trouve, ainsi que son état.

L'état d'une donnée en mémoire cache dépend du protocole utilisé. Dans l'exemple du protocole MESI donné si avant, une donnée est dans l'état « modifié » (M pour « modified » en anglais) si la donnée n'est présente que dans une seule mémoire cache et que cette donnée a été modifiée par rapport à celle présente en mémoire non-cache (d'où la donnée initiale provient). Dans ce cas, le processeur qui souhaite avoir accès à la donnée doit attendre qu'elle soit mise en conformité avec la version en mémoire. Toujours dans le même exemple, une donnée est dans l'état « exclusif » (E pour « exclusive » en anglais), si la donnée n'est présente que dans une seule mémoire cache et que cette donnée correspond bien à la version en mémoire non-cache. Une donnée est dans l'état « partagé » (S pour « shared » en anglais) si la donnée est présente dans plusieurs mémoires cache. Enfin, une donnée est dans l'état « invalide » (I pour « invalid » en anglais) si la donnée n'est pas à jour. Elle doit alors être ignorée par les processeurs et ne pas être utilisée.

D'autres protocoles existent avec plus ou moins d'états définis. Par exemple le protocole MSI ne comporte que les trois états M, S et I définis ci-dessus alors que le protocole MOESI ajoute un état « détenu » (O pour « owned » en anglais) signifiant que la donnée est dans la version la plus récente mais que la mémoire non-cache d'où elle provient n'est plus à jour.

La plupart des protocoles de cohérence de cache mettent en oeuvre des listes, ou répertoires, reflétant l'historique des demandes faites sur chaque donnée. Ce type de protocole est dit « directory-based » en terminologie anglo-saxonne.

Chaque processeur tient une liste qui pour chaque ligne de mémoire cache, indique les processeurs auprès desquels la donnée qui y est inscrite est stockée ainsi que son état. Cette liste peut être plus ou moins complète en ce qui concerne les informations qu'elle contient.

L'utilisation de cette liste permet de garder auprès des processeurs un historique des demandes de la part des processeurs par rapport à une donnée. Cela permet notamment de filtrer les interrogations du cache, en évitant par exemple d'interroger le cache d'un processeur qui n'a pas manipulé une donnée. En outre, si une donnée n'apparaît pas dans les listes des processeurs, il peut en être déduit que la donnée n'est pas en cours d'utilisation par un processeur et qu'elle est donc stockée en mémoire centrale (non cache) et à jour.

La **figue** 1 illustre schématiquement un système multiprocesseurs.

Le système comporte quatre modules 100, 110, 120, 130. Chaque module comporte une pluralité de processeurs. Le module 100 comporte deux processeurs 101 et 102. Le module 110 comporte deux processeurs 111 et 112. Le module 120 comporte deux processeurs 121 et 122. Le module 130 comporte deux processeurs 131 et 132. Chaque processeur dispose d'une mémoire cache respective. Ces mémoires cache ne sont pas représentées.

Le nombre de modules dans le système et le nombre de processeurs dans les modules est purement illustratif. Les modules peuvent contenir des nombres de processeurs différents.

Afin de gérer les communications entre les différents processeurs, notamment pour gérer la cohérence de cache, chaque module 100, 110, 120, 130 dispose d'un module proxy 103, 113, 123, 133 respectif. Dans un souci de clarté, les interconnexions entre les modules proxy ne sont pas représentées.

Ainsi, chaque processeur dispose d'une unique interface pour communiquer avec les autres processeurs. Tout se passe comme si chaque processeur ne s'adressait à chaque fois qu'à un seul autre processeur. En particulier, les modules proxy tiennent des répertoires pour le compte des processeurs de leurs modules respectifs.

L'utilisation de modules proxy s'avère nécessaire lorsque le nombre de processeurs du système devient important.

Par ailleurs, le système comporte un module de mémoire centrale 140. Ce module stocke les données de manière durable. C'est de cette mémoire que sont issues les données manipulées par les processeurs et temporairement stockées dans les mémoires cache. Le module 140 tient lui aussi un répertoire listant les données et les processeurs qui en ont demandé l'accès. Dans un souci de clarté de la figure, le module 140 a été représenté de manière distincte des modules 100, 110, 120 et 130. Cependant, la mémoire centrale du module 140 peut être distribuée dans les modules 100, 110, 120 et 130. Chacun de ces modules héberge ainsi une partie de la mémoire centrale. Le module 140 est ainsi un espace mémoire virtuel commun physiquement distribué dans le système.

La performance des systèmes multiprocesseurs dépend en partie de la capacité des modules proxy à retrouver rapidement une donnée en mémoire cache ou en mémoire centrale dans le système.

A titre d'illustration, la demande de brevet WO 00/36514 A1 décrit un système NUMA (non-uniform memory access) comprenant un noeud local et un noeud distant interconnectés. Le noeud local comprend au moins un processeur et une mémoire cache associée à ce dernier, une mémoire et un contrôleur de mémoire. En réponse à une requête d'accès à des données, reçue du processeur, le contrôleur de mémoire transmet une requête spéculative au noeud distant. La réponse à cette requête spéculative, reçue du noeud distant, est prise en compte ou non selon un mécanisme de résolution du noeud local.

Le document EP 1 624 377 A2 divulgue un système multiprocesseur comportant un module de gestion de mémoire contrôlant la cohérence et l'échange de données entre les processeurs et une mémoire centrale, chaque processeur ayant une mémoire cache associée. Le document US 2002/087811 A1 divulgue un procédé pour réduire la latence de la mémoire dans une architecture multi-noeuds, dans lequel une lecture de mémoire spéculative est émise parallèlement au traitement du protocole de cohérence de cache.

Il existe encore un besoin pour réduire le temps de recherche de données dans les systèmes multiprocesseurs.

La présente invention s'inscrit dans ce cadre. La présente invention est définie par les revendications indépendantes jointes auxquelles il convient de se référer. Des caractéristiques avantageuses sont exposées dans les revendications dépendantes.

Un **premier aspect** de l'invention concerne un procédé d'accès à une donnée dans un système multiprocesseur, ledit système comportant une pluralité de processeurs, chaque processeur étant associé à une mémoire cache respective, un module de gestion de mémoire cache, une mémoire centrale et un module de gestion de mémoire centrale, le procédé comportant les étapes suivantes:
- de réception, par ledit module de gestion de mémoire cache, d'une requête initiale relative à l'accès par un processeur à une donnée,
- de premier envoi, par ledit module de gestion de mémoire cache, d'au moins une première requête à destination d'au moins une mémoire cache concernant ladite donnée,
- de deuxième envoi, en parallèle au premier envoi, par ledit module de gestion de mémoire cache, d'au moins une deuxième requête à destination dudit module de gestion de mémoire centrale concernant ladite donnée,
- de vérification, par ledit module de gestion de mémoire centrale, pour déclencher ou non l'interrogation de ladite mémoire centrale, et
- d'interrogation ou non, par ledit module de gestion de mémoire centrale, de ladite mémoire centrale en fonction de ladite vérification.

Un procédé selon le premier aspect permet d'effectuer une interrogation parallèle pour obtenir la donnée soit en mémoire cache ou soit en mémoire centrale.

On accélère ainsi l'obtention de la donnée car il n'est pas attendu d'apprendre que la donnée n'est pas présente en mémoire cache pour interroger la mémoire centrale.

En outre, un procédé selon le premier aspect permet de simplifier les protocoles d'interrogation de mémoire dans les systèmes multiprocesseurs car la lecture spéculative de la mémoire centrale reçoit une réponse. Il n'est pas nécessaire de confirmer une absence de réponse à une requête par une autre requête.

Le procédé peut en outre comporter une étape de rejet, par ledit module de gestion de mémoire centrale, de ladite deuxième requête en cas de non disponibilité de ladite donnée au sein de ladite mémoire centrale.

Par exemple, ladite deuxième requête est rejetée, par ledit module de gestion de mémoire centrale, s'il est déterminé que ladite donnée est disponible au sein d'au moins une mémoire cache dudit système.

Par exemple encore, ledit module de gestion de mémoire cache se met en outre en attente de l'obtention de ladite donnée de la part de ladite au moins une mémoire cache, en réponse à ladite première requête.

Selon des réalisations, ladite deuxième requête est rejetée, par ledit module de gestion de mémoire centrale, si un conflit d'accès à ladite donnée par plusieurs processeurs est détecté.

Par exemple, une gestion de mémoire cache par répertoire est mise en oeuvre au sein dudit système et ladite vérification comporte la consultation d'un répertoire d'état des données en mémoire cache.

Le procédé peut en outre comporter une étape de réception, par ledit module de gestion de mémoire centrale, d'une confirmation de ladite deuxième requête de la part dudit module de gestion de mémoire cache.

Le procédé peut en outre comporter une étape de déclenchement d'une interrogation dudit module de mémoire centrale en réponse à ladite confirmation.

Le procédé peut aussi comporter une étape de transmission à destination dudit module de gestion de mémoire cache, d'un message de terminaison de ladite requête initiale en réponse à ladite confirmation.

Un **deuxième aspect** de l'invention concerne un système multiprocesseur configuré pour la mise en oeuvre d'un procédé selon le premier aspect.

Les objets le deuxième aspect de l'invention offre au moins les mêmes avantages que ceux offerts par l'objet du premier aspect dans ses divers exemples de réalisation.

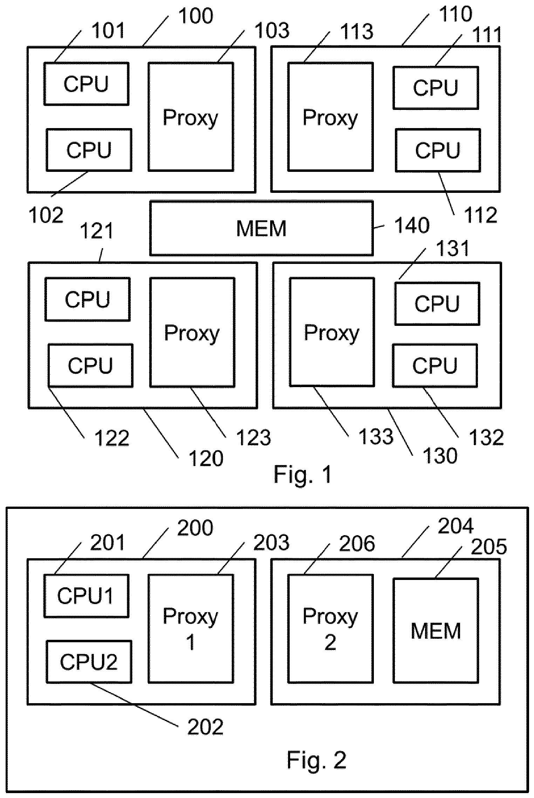

D'autres caractéristiques et avantages de l'invention apparaîtront à la lecture de la présente description détaillée qui suit, à titre d'exemple non limitatif, et des figures annexées parmi lesquelles, en outre la figure 1 :
- la **figure 2** illustre un système selon des modes de réalisation, et
- la **figure 3** est un diagramme illustrant les échanges entre les divers éléments du système.

Dans ce qui suit, des modes de réalisation de l'invention sont décrits. En particulier, il est décrit un échange de messages spécifique permettant à des modules de gestion de mémoire cache de modules processeurs (par exemple des modules proxy) de retrouver plus rapidement la localisation d'une donnée dans les mémoires d'un système multiprocesseur (mémoire cache ou mémoire centrale).

La **figure 2** présente un contexte général de mise en oeuvre de modes de réalisation dans un système multiprocesseur.

Un module processeur 200 comporte une pluralité de processeurs 201, 202. Ici, le module processeur comporte deux processeurs, mais il pourrait en comporter un tout autre nombre. Chaque processeur est associé à une mémoire cache (non représentées). Le module 200 comporte en outre un module de gestion de mémoire cache 203 pour gérer les mémoires caches, notamment la cohérence de leur contenu. Le module 203 met par exemple en oeuvre la gestion de cohérence de cache.

Dans un souci de concision, le système multiprocesseur comporte ici un seul module processeur. Il pourrait bien entendu en comporter un tout autre nombre.

Le système comporte par ailleurs un module de mémoire centrale (non cache) 204. Le module comporte une mémoire centrale 205 pour stocker des données et une unité de gestion de mémoire centrale 206. Dans un souci de clarté de la figure, le module 204 a été représenté de manière distincte du module processeur 200. Cependant, le module de mémoire centrale peut-être distribué dans les modules processeurs. Chacun de ces modules héberge ainsi une partie de la mémoire centrale. Le module 204 est ainsi un espace mémoire virtuel commun physiquement distribué dans le système.

Lorsque le module de gestion de mémoire cache 203 souhaite obtenir une donnée, suite à une requête initiale de la part du processeur 201 (ou d'un autre processeur du module 200), il envoie une requête relative à cette donnée au module de gestion de mémoire centrale 206. La requête initiale est par exemple consécutive à l'émission, par le processeur, d'une référence à une adresse mémoire vers sa mémoire cache. Lorsque cette interrogation n'est pas satisfaite, c'est-à-dire que le bloc mémoire correspondant à l'adresse mémoire est absent de la mémoire cache (on parle alors de « MISS », en opposition à « HIT » lorsque le bloc est présent), le processeur émet la requête initiale pour obtenir le bloc mémoire dans la mémoire centrale. L'interrogation du processeur peut concerner la lecture d'une donnée avec ou sans intention de la modifier.

Le module 203 envoie cette requête alors qu'il n'a pas encore vérifié si la donnée en question se trouve ou non dans une mémoire cache du module processeur 200 auquel il appartient ou une mémoire cache d'un autre module processeur. La requête du module 203 vers le module 206 est ainsi qualifiée de « spéculative ». Elle pourrait aussi être qualifiée de « requête par anticipation ».

Afin que le module 206 puisse identifier le caractère spéculatif de la requête, un code particulier peut être défini et associé à la requête. Ainsi, le module 206 peut mettre en oeuvre le traitement associé aux requêtes spéculatives comme décrit ci-après.

Par exemple, le module 206 dispose d'un répertoire qui pour chaque donnée qu'il stocke dans l'unité 205 lui fournit des informations sur l'état de cette donnée (par exemple au sens du protocole MESI évoquée ci-avant) et sur la liste des agents protocoles, notamment les processeurs, qui en possèdent une copie dans leurs mémoires caches respectives. Les informations peuvent être plus ou moins détaillées selon le protocole de gestion de mémoire mis en oeuvre. Les agents protocoles couvrent les processeurs, les proxys et toute autre entité pouvant envoyer des requêtes d'accès à des données en mémoire centrale. Dans la hiérarchie des agents protocoles, les processeurs sont les agents terminaux qui sont les sources de requêtes (car ce sont eux qui utilisent les données), les proxys sont les agents intermédiaires car ils représentent les processeurs auprès de de la mémoire centrale.

Lorsque le module 206 reçoit une requête spéculative, il consulte son répertoire pour vérifier l'état de la donnée dans les mémoires cache au sein du système.

Si les informations du répertoire permettent de déterminer que la donnée n'est pas présente en mémoire cache, ou dans un état compatible avec sa demande (par exemple au sens du protocole MESI), le module 206 traite la requête spéculative de manière standard, c'est-à-dire comme s'il ne s'agissait pas d'une requête spéculative. Une requête standard est une requête que le module 203 aurait envoyée uniquement après avoir consulté son cache, c'est-à-dire sachant que la donnée n'est pas présente en mémoire cache. La requête reçue par le module 206 suit alors le traitement standard prévu dans le protocole de cohérence de cache.

Si les informations du répertoire permettent de déterminer que la donnée est présente en mémoire cache, et dans un état compatible avec la requête, le module 206 ne lance par de traitement de la requête spéculative.

Si le module 206 détecte un conflit avec une autre requête en cours concernant la donnée qui fait l'objet de la requête spéculative, il peut ne pas donner suite à cette requête et ce, quelles que soient les informations fournies par le répertoire. Un conflit apparaît par exemple lorsque deux agents protocoles (processeur, proxy) émettent des requêtes respectives sur une même adresse mémoire. Ainsi par exemple, si deux processeurs souhaitent modifier une même donnée ils doivent le faire successivement, afin d'éviter toute incohérence sur la donnée.

Dans tous les cas, le module 206 envoie un message au module 203 pour lui signifier que la requête spéculative a été traitée.

Ce message peut comporter une indication concernant la suite donnée à la requête spéculative par le module 206 (traitement standard ou fin de traitement). Cette indication peut conditionner la suite des traitements effectués par le module 203.

En parallèle de l'envoi de la requête spéculative, le module 203 lance la consultation des mémoires cache du système, et ce, de manière standard. Une fois la consultation terminée, il se met en attente de la réponse du module 206 lui indiquant la fin du traitement de sa requête spéculative. La consultation prend normalement moins de temps que l'interrogation du module 206. Cependant, si l'inverse se produit et que le module 203 reçoit la réponse du module 206 avant la fin de la consultation, il se met en attente de la fin de celle-ci. Tant que ces deux conditions ne sont pas remplies, fin de consultation et réception d'une réponse de la part du module 206, le module 203 ne poursuit pas le traitement de la requête initialement reçue du processeur 201. Par ailleurs, il ne lance par le traitement d'autres requêtes concernant la même donnée qui pourraient provenir du même processeur 201 ou d'un autre processeur du module processeur.

Le résultat de la consultation des mémoires cache permet au module 206 de déterminer la suite des traitements à effectuer.

Si la donnée est présente en mémoire cache, dans un état compatible avec la requête initiale, le module 203 ne donne aucune suite à sa requête spéculative. Le module 206 ayant eu lui aussi cette information grâce à son répertoire, il ne donne pas non plus suite à la requête spéculative. La requête spéculative est donc bien terminée dans tout le système.

Si la donnée n'est pas présente en mémoire cache, ou dans un état non compatible avec la requête initiale, la réponse du module 206 peut comporter une indication pour déterminer la suite des traitements.

Par exemple, le module 206 indique dans sa réponse quelle suite il a donné à la requête spéculative. Par exemple, sa réponse comporte une indication sur la fourniture ou non de la donnée, sur un éventuel conflit à traiter ou autre. Si le module 206 a poursuivi le traitement de la requête spéculative, le module 203 se place en attente de la donnée. Si le module 206 n'a pas poursuivi le traitement de la requête, le module 203 lui envoie par exemple une confirmation de traitement pour obtenir la donnée. Cette confirmation de traitement contient par exemple les informations nécessaires au module 206 pour traiter la requête spéculative au cas où il n'aurait pas conservé celles initialement contenues dans la requête spéculative. Il s'agit ainsi d'une réitération de la requête spéculative. Les informations contenues dans la confirmation de traitement peuvent par exemple comporter l'identité de l'entité requérant la donnée, un numéro de requête, un numéro d'adresse demandée, ou autre.

Par exemple encore, le module 206 n'indique pas dans sa réponse quelle suite il a donné à la requête spéculative. Le module 203 envoie alors tout de même une confirmation de traitement de la requête spéculative au module 206. Cette confirmation de traitement peut contenir les informations nécessaires au module 206 pour traiter la requête au cas où il aurait mis fin au traitement de la requête spéculative sans donner suite et n'aurait pas conservé les informations associées. Au cas où il aurait poursuivi le traitement de la requête spéculative, le module 206 attend malgré tout une confirmation du module 203 et ne met donc fin au traitement de la requête spéculative qu'une fois qu'il reçoit cette confirmation.

Dans tous les cas ci-dessus, la requête spéculative suit à partir de cet instant le traitement standard prévu par le protocole de cohérence de cache mis en oeuvre par les modules de gestion de mémoire cache.

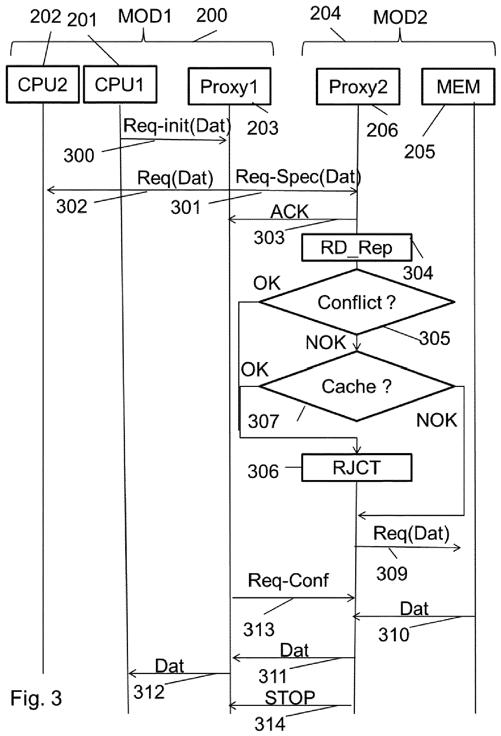

La **figure 3** est un diagramme illustrant les échanges entre les divers éléments du système décrits ci-dessus.

Dans la figure 3, on retrouve le module processeur 200 comportant les processeurs 201, 202 et le module de gestion de mémoire cache 203 ainsi que le module de mémoire centrale 204 comportant le module de gestion de mémoire centrale 206 et la mémoire centrale 205. Comme pour la figure 2, les mémoires cache respectivement associées aux processeurs ne sont pas représentées.

Lors d'une première étape 300, le module 203 reçoit du processeur 201 une requête initiale concernant une donnée. Lorsque le module 203 reçoit cette requête, il lance en parallèle l'interrogation spéculative 301 du module 206 et la consultation 302 de la mémoire cache du processeur 202. La mémoire cache du processeur 201 n'est pas consultée car ce processeur l'a fait avant d'envoyer la requête initiale.

La consultation des processeurs peut par exemple se faire par le biais de transactions de type « Snoopy ». La consultation pourrait aussi se faire par interrogation d'un répertoire si le module 203 met en oeuvre une gestion de cohérence de cache par répertoire.

La requête spéculative peut quant à elle être par exemple une copie conforme de la requête initiale envoyée par le processeur 201. Le caractère spéculatif de la requête envoyée lors de l'étape 301 peut être identifié par une classe de messages - c'est-à-dire un ensemble de messages du même type - supplémentaire, qui peut par exemple être ajoutée aux types de transactions gérées par les modules de gestion de mémoire. Par exemple cette classe de message est identifiée par un numéro unique et reprend les caractéristiques des requêtes de la classe de messages « Requête » utilisés par les processeurs (par exemple des requêtes de lecture de données). Cette classe de messages propre aux requêtes spéculatives est par exemple véhiculée au sein de la même queue virtuelle et obéit aux mêmes règles de protocole que celles des requêtes standards (c'est-à-dire non spéculatives). Les requêtes et leurs réponses cheminent dans le module processeur sur des canaux virtuels (un lien physique peut supporter plusieurs canaux virtuels). Ainsi, les requêtes spéculatives et les requêtes standard empruntent le même canal virtuel.

Lorsque le module 206 reçoit la requête spéculative, il envoie un message 303 de prise en compte de celle-ci comme un accusé de réception.

Dès lors qu'il a transmis ses requêtes lors des étapes 301 et 302, le module 203 se place en attente des réponses de la part du module 206 ou du processeur 202.

Ainsi, le module 203 interroge la mémoire cache du processeur 202 du module processeur 200 alors que le module 206 va aussi consulter son répertoire lors d'une étape 304 pour connaître la localisation de la donnée requise et éventuellement son état.

L'interrogation spéculative permet aux modules de gestion de mémoire cache recevant des requêtes de la part des processeur de ne pas faire d'interrogation de répertoire tout en gardant un niveau de performance équivalent au cas où ces modules feraient de telles interrogations avant de solliciter la mémoire centrale.

L'envoi de la requête spéculative lors de l'étape 301 en parallèle à l'envoi de l'étape 302 permet de gagner du temps et d'accélérer le fonctionnement du système.

Lorsque le module 206 reçoit la requête spéculative, il la stocke d'abord dans un sous-module permettant de traiter les requêtes. Le module 206 consulte ensuite son répertoire contenant l'état de la donnée et la liste des processeurs auprès desquelles elle est stockée (on rappelle qu'une donnée peut se trouver dans différentes mémoires caches).

Une vérification est ensuite effectuée lors de l'étape 305 pour détecter un éventuel conflit entre processeurs concernant la donnée. Si un conflit est détecté (OK), la requête spéculative est rejetée lors d'une étape 306.

Sinon (NOK) une étape 307 est mise en oeuvre pour vérifier si la donnée est stockée en mémoire cache.

Si le répertoire indique que la donnée se trouve en mémoire cache (OK), la requête spéculative est rejetée lors de l'étape 306.

Lors de l'étape de rejet 306, le sous-module dans lequel la requête spéculative est stockée est remis à zéro, comme ce serait le cas pour une requête standard.

Si le répertoire du module 206 lui indique que la donnée est disponible en mémoire cache, il laisse le module 200 obtenir la donnée en interne. Le module 203 reçoit une réponse de la part du processeur disposant de la donnée (le processeur 202 en l'occurrence) indiquant qu'il va lui transmettre la donnée, puis il reçoit la donnée (étapes non représentées).

Si aucun conflit n'est détecté et que la donnée ne se trouve pas dans le module 200, le module proxy 206 envoie immédiatement, sans attendre, une requête en lecture de la donnée vers la mémoire 205 lors d'une étape 309.

La mémoire répond alors avec la donnée lors de l'étape 310 et le module proxy 206 la transmet au module proxy 203 lors de l'étape 311 afin que ce dernier puisse la transmettre au processeur 201 lors de l'étape 312.

En parallèle, suite à la réception du message 303 de prise en compte de la requête spéculative, le module 203 envoie un message 313 confirmant la requête spéculative pour obtenir la donnée.

Il s'agit en pratique d'une requête en lecture normale. L'interprétation de la requête par le module 206 se fait en fonction du rejet ou non de la requête spéculative. Si la requête n'a pas été rejetée, le message de confirmation de la requête spéculative peut arriver à n'importe quel moment. Il se peut que le message de confirmation arrive avant que les données soient reçues de la part de la mémoire par exemple.

Par ailleurs, la donnée reçue par le module 206 de la mémoire est transmise au module 203 sans attendre la requête de confirmation. Cela optimise la latence entre la requête initiale et la réception de la donnée.

Lorsque le module 206 a reçu le message de confirmation et qu'il a transmis la donnée, il envoie un message de terminaison 314 au module 203.

En effet, une requête de lecture est une transaction qui déclenche plusieurs types de messages (requêtes et réponses): réponse avec des données, réponse sans données (des réponses de consultation de cache par exemple). Plusieurs réponses peuvent être agrégées en un seul message mais elles sont en fait distinctes dans leur contenu.

C'est la réponse qui contient la donnée demandée qui permet de débloquer le processeur qui l'attend.

De plus, si une transaction est identifiée par un numéro dans le système, il y a donc besoin de savoir que tous les traitements relatifs à cette transaction sont terminés pour pouvoir réutiliser ce numéro. Le message de terminaison permet ainsi de libérer ce numéro. Lorsque le module 206 termine tous les traitements internes d'une transaction (comme par exemple mettre à jour son répertoire suite à cette transaction), il envoie le message de terminaison au module 203.

Dans le cas (non représenté) où la requête spéculative a été rejetée, le module 206 ne transmet la requête 309 qu'à condition de recevoir la requête de confirmation. Le module 206 interprète ainsi la requête de confirmation comme une requête normale et interroge la mémoire 205 (dans le cas précédent où la requête spéculative était rejetée, la requête de confirmation a été interprétée comme une confirmation en vue de la terminaison du processus).

Il se peut que l'information contenue dans le répertoire du module 206 ne soit pas exacte. Ainsi, il peut rejeter à tort la requête spéculative lors de l'étape 306. Dans ce cas, la requête de confirmation 313 va aussi déclencher l'envoi de la requête 309.

Les requêtes spéculatives sont toujours suivies de réponses. Ainsi elles ne peuvent pas persister dans le système sans que leurs émetteurs ne sachent si elles ont été traitées ou non. Cela permet d'optimiser le fonctionnement du système.

Les réalisations décrites ci-dessus peuvent connaître des implémentations différentes.

Par exemple, l'état de la donnée stocké dans le répertoire peut être utilisé. Par exemple, lorsque le module 206 consulte son répertoire lors de l'étape 304, il peut ne consulter que la liste des processeurs possédant la donnée dans un état particulier spécifié par exemple par le processeur dans la requête initiale de l'étape 300. Ainsi, même si la donnée est présente en mémoire cache, mais dans un état différent que celui demandé, il peut ne pas faire suite à la requête.

Par exemple, si le processeur souhaite avoir l'exclusivité de la donnée - c'est-à-dire être le seul à la posséder - et qu'il dispose de la donnée dans son cache en état partagé, cette donnée ne lui est pas utile. Il doit alors obtenir la donnée en état exclusif. Le module 206 peut donc décider de poursuivre le traitement de la requête si l'état de la donnée en cache n'est pas compatible avec celui demandé par la requête.

Les modules de gestion de mémoire cache peuvent mettre en oeuvre une gestion de cohérence de mémoire cache par répertoire mais aussi d'autres types de gestion de cohérence.

Certains systèmes peuvent comporter une pluralité de modules multiprocesseurs (ou « clusters »). Chaque module multiprocesseur comporte une pluralité de processeurs respectivement associés à leurs mémoires caches et héberge une partie d'un module de mémoire centrale (mémoire centrale et module de gestion). En d'autres termes, le module de mémoire centrale est distribué dans les modules multiprocesseurs. Dans ces systèmes, la gestion de cohérence de cache peut être de type « snoopy » au sein de chaque module multiprocesseurs alors qu'elle est gérée par répertoire (« directory based ») entre les modules multiprocesseurs.

Les modes de réalisations et les variantes présentées ci-dessus offrent une solution simple, robuste et générique pour augmenter la performance d'un système multiprocesseur respectant un protocole de cohérence de cache tout en permettant de réduire les coûts de développement et de production des modules proxy.

En particulier, la cohérence des caches est garantie. En effet, le traitement de la requête spéculative ne modifie pas le protocole de cohérence de cache. Il y ajoute une phase qui précède le traitement standard d'une requête. Cette phase n'inclut aucune action pouvant mettre en péril la cohérence de cache étant donné qu'elle se contente de vérifier l'état du cache pour la donnée concernée.

Par ailleurs, il est possible de gérer les conflits d'accès à une donnée, par exemple lorsque plusieurs processeurs du système demandent simultanément l'accès à la même donnée. Au niveau du module de gestion de mémoire cache, les conflits peuvent être gérés en bloquant le traitement de la requête spéculative et de toute autre requête sur la même donnée tant que la réponse du module à qui la requête spéculative a été envoyée n'a pas été reçue. Au niveau du module de gestion de mémoire centrale, le moindre conflit détecté peut provoquer la fin du traitement de la requête spéculative sans donner suite.

D'une manière générale, l'accès aux données peut être donné plus rapidement aux processeurs. La mémoire centrale est interrogée avant même de connaître le résultat de la consultation du cache pour envoyer la requête à la mémoire centrale.

Les ressources utilisées pour la mise en oeuvre de modes de réalisation sont réduites. Chaque ressource coûte non seulement en surface de silicium mais aussi en consommation d'énergie, en rendement de production ou en temps de vérification. Il y a donc intérêt à minimiser les ressources utilisées pour faire fonctionner un système.

La lecture spéculative permet de totalement s'affranchir de ce problème car il n'est pas nécessaire d'implémenter de répertoire ni de cache dans le module proxy. L'absence de répertoire peut être contrebalancée par le temps d'accès à la mémoire centrale réduite. Le module proxy s'en remet au répertoire du module de gestion de mémoire centrale. La lecture spéculative permet ainsi à un module proxy d'offrir une performance équivalente à celle fournie grâce à la présence d'un répertoire ou d'un cache sans en implémenter.

La présente invention a été décrite et illustrée dans la présente description détaillée en référence aux figures jointes.

Dans les revendications, le terme "comporter" n'exclut pas d'autres éléments ou d'autres étapes. L'article indéfini « un » n'exclut pas le pluriel. Un seul processeur ou plusieurs autres unités peuvent être utilisées pour mettre en oeuvre l'invention. Les différentes caractéristiques présentées et/ou revendiquées peuvent être avantageusement combinées. Leur présence dans la description ou dans des revendications dépendantes différentes, n'exclut pas en effet la possibilité de les combiner. Les signes de référence ne sauraient être compris comme limitant la portée de l'invention.

## Revendications

1. Procédé d'accès à une donnée dans un système multiprocesseur, ledit système comportant une pluralité de modules processeurs (100, 110, 120, 130, 200) comportant chacun une pluralité de processeurs (201, 202), chaque processeur étant associé à une mémoire cache respective, et un module de gestion de mémoire cache (203), ledit système comportant un module de mémoire centrale (204), se présentant sous la forme d'un espace virtuel commun entre les modules processeurs (100, 110, 120, 130, 200), ledit module de mémoire centrale (204) comportant une mémoire centrale (205) et un module de gestion de mémoire centrale (206), le procédé comportant les étapes suivantes :
• de réception (300), par ledit module de gestion de mémoire cache, d'une requête initiale relative à l'accès par un processeur à une donnée,
• de premier envoi (302), par ledit module de gestion de mémoire cache, d'au moins une première requête à destination d'au moins une mémoire cache concernant ladite donnée,
• de deuxième envoi (301), en parallèle au premier envoi, par ledit module de gestion de mémoire cache, d'au moins une deuxième requête à destination dudit module de gestion de mémoire centrale concernant ladite donnée,
• de vérification (304), par ledit module de gestion de mémoire centrale, pour déclencher ou non l'interrogation de ladite mémoire centrale, et
• d'interrogation (309) ou non, par ledit module de gestion de mémoire centrale, de ladite mémoire centrale en fonction de ladite vérification
• dans lequel une gestion de mémoire cache par répertoire est mise en oeuvre au sein dudit système et dans lequel ladite vérification par ledit module de gestion de mémoire centrale comporte la consultation d'un répertoire d'état des données en mémoire cache,
• dans lequel ledit module de gestion de mémoire centrale dispose d'un répertoire qui pour chaque donnée stockée dans ladite mémoire centrale lui fournit des informations sur l'état de cette donnée et sur une liste d'agents protocoles pouvant envoyer des requêtes d'accès à des données en mémoire centrale qui en possèdent une copie dans leurs mémoires caches respectives, et
• dans lequel ladite interrogation est effectuée si les informations du répertoire permettent de déterminer que ladite donnée n'est pas présente en mémoire cache ou dans un état compatible avec ladite requête initiale.

2. Procédé selon la revendication 1, comportant en outre une étape de rejet (306), par ledit module de gestion de mémoire centrale, de ladite deuxième requête en cas de non disponibilité de ladite donnée au sein de ladite mémoire centrale.

3. Procédé selon la revendication 1, dans lequel ladite deuxième requête est rejetée, par ledit module de gestion de mémoire centrale, s'il est déterminé que ladite donnée est disponible au sein d'au moins une mémoire cache dudit système.

4. Procédé selon la revendication 3, dans lequel ledit module de gestion de mémoire cache se met en outre en attente de l'obtention de ladite donnée de la part de ladite au moins une mémoire cache, en réponse à ladite première requête.

5. Procédé selon l'une des revendications 2 à 4, dans lequel ladite deuxième requête est rejetée, par ledit module de gestion de mémoire centrale, si un conflit d'accès à ladite donnée par plusieurs processeurs est détecté.

6. Procédé selon l'une des revendications précédentes, comportant en outre une étape de réception, par ledit module de gestion de mémoire centrale, d'une confirmation de ladite deuxième requête de la part dudit module de gestion de mémoire cache.

7. Procédé selon la revendication 6, comportant en outre une étape de déclenchement d'une interrogation dudit module de mémoire centrale en réponse à ladite confirmation.

8. Procédé selon la revendication 6, comportant en outre une étape de transmission à destination dudit module de gestion de mémoire cache, d'un message de terminaison de ladite requête initiale en réponse à ladite confirmation.

9. Système multiprocesseur comportant :
• une pluralité de modules processeurs (100, 110, 120, 130, 200) comportant chacun une pluralité de processeurs (201, 202), chaque processeur étant associé à une mémoire cache respective, et un module de gestion de mémoire cache (203),
• ledit système comportant un module de mémoire centrale (204) se présentant sous la forme d'un espace virtuel commun entre les modules processeurs (100, 110, 120, 130, 200), ledit module de mémoire centrale (204) comportant une mémoire centrale (205), et
• un module de gestion de mémoire centrale (206), dans lequel, pour l'accès à une donnée dans le système:
∘ ledit module de gestion de mémoire cache est configuré pour recevoir une requête initiale relative à l'accès par un processeur à une donnée, pour un premier envoi d'au moins une première requête à destination d'au moins une mémoire cache concernant ladite donnée, et pour un deuxième envoi, en parallèle au premier envoi, d'au moins une deuxième requête à destination dudit module de gestion de mémoire centrale concernant ladite donnée,
∘ ledit module de gestion de mémoire centrale est configuré pour une vérification déclenchant ou non l'interrogation de ladite mémoire centrale et pour l'interrogation ou non, de ladite mémoire centrale en fonction de ladite vérification
∘ dans lequel une gestion de mémoire cache par répertoire est mise en oeuvre au sein dudit système et dans lequel ladite vérification par ledit module de gestion de mémoire centrale comporte la consultation d'un répertoire d'état des données en mémoire cache,
∘ dans lequel ledit module de gestion de mémoire centrale dispose d'un répertoire qui pour chaque donnée stockée dans ladite mémoire centrale lui fournit des informations sur l'état de cette donnée et sur une liste d'agents protocoles pouvant envoyer des requêtes d'accès à des données en mémoire centrale qui en possèdent une copie dans leurs mémoires caches respectives, et
∘ dans lequel ladite interrogation est effectuée si les informations du répertoire permettent de déterminer que ladite donnée n'est pas présente en mémoire cache ou dans un état compatible avec ladite requête initiale.

## Patentansprüche

1. Verfahren zum Zugriff auf ein Datenelement in einem Multiprozessorsystem, wobei das System eine Vielzahl von Prozessormodulen (100, 110, 120, 130, 200) umfasst, die jeweils eine Vielzahl von Prozessoren (201, 202) und ein Cache-Speicher-Verwaltungsmodul (203) umfassen, wobei jeder Prozessor einem entsprechenden Cache-Speicher zugeordnet ist, wobei das System ein Hauptspeichermodul (204) in Form eines gemeinsamen virtuellen Raums zwischen den Prozessormodulen (100, 110, 120, 130, 200) umfasst, wobei das Hauptspeichermodul (204) einen Hauptspeicher (205) und ein Hauptspeicher-Verwaltungsmodul (206) umfasst, wobei das Verfahren folgende Schritte umfasst:
• Empfangen (300), durch das Cache-Speicher-Verwaltungsmodul, einer anfänglichen Anfrage für den Zugriff eines Prozessors auf ein Datenelement,
• erstes Senden (302), durch das Cache-Speicher-Verwaltungsmodul, von mindestens einer ersten Anfrage an mindestens einen Cache-Speicher, die das Datenelement betrifft,
• zweites Senden (301), parallel zum ersten Senden, durch das Cache-Speicher-Verwaltungsmodul, von mindestens einer zweiten Anfrage an das Hauptspeicher-Verwaltungsmodul, die das Datenelement betrifft,
• Überprüfen (304), durch das Hauptspeicher-Verwaltungsmodul, um die Abfrage des Hauptspeichers auszulösen oder nicht, und
• Abfragen (309), oder nicht, des Hauptspeichers durch das Hauptspeicher-Verwaltungsmodul in Abhängigkeit von der Überprüfung,
• wobei eine verzeichnisbasierte Cache-Speicher-Verwaltung in dem System implementiert ist und wobei die Überprüfung durch das Hauptspeicher-Verwaltungsmodul das Abfragen eines Datenstatusverzeichnisses im Cache-Speicher umfasst,
• wobei das Hauptspeicher-Verwaltungsmodul über ein Verzeichnis verfügt, das ihm für jedes in dem Hauptspeicher gespeicherte Datenelement Informationen über den Status dieses Datenelements und über eine Liste von Protokollagenten liefert, die Zugriffsanfragen an Daten im Hauptspeicher senden können, die eine Kopie davon in ihren jeweiligen Cache-Speichern aufweisen, und
• wobei die Abfrage durchgeführt wird, wenn die Verzeichnisinformationen es ermöglichen, festzustellen, dass das Datenelement nicht im Cache-Speicher oder in einem Zustand vorhanden sind, der mit der anfänglichen Anfrage kompatibel ist.

2. Verfahren nach Anspruch 1, ferner umfassend einen Schritt des Zurückweisens (306) der zweiten Anfrage durch das Hauptspeicher-Verwaltungsmodul im Falle der Nichtverfügbarkeit des Datenelements im Hauptspeicher.

3. Verfahren nach Anspruch 1, wobei die zweite Anfrage von dem Hauptspeicher-Verwaltungsmodul zurückgewiesen wird, wenn festgestellt wird, dass das Datenelement in mindestens einem Cache-Speicher des Systems verfügbar ist.

4. Verfahren nach Anspruch 3, wobei das Cache-Speicher-Verwaltungsmodul ferner darauf wartet, dass das Datenelement aus dem mindestens einen Cache-Speicher als Reaktion auf die erste Anfrage erhalten wird.

5. Verfahren nach einem der Ansprüche 2 bis 4, wobei die zweite Anfrage von dem Hauptspeicher-Verwaltungsmodul zurückgewiesen wird, wenn ein Konflikt beim Zugriff auf das Datenelement durch mehrere Prozessoren erkannt wird.

6. Verfahren nach einem der vorstehenden Ansprüche, ferner umfassend einen Schritt des Empfangens einer Bestätigung der zweiten Anfrage von dem Cache-Speicher-Verwaltungsmodul durch das Hauptspeicher-Verwaltungsmodul.

7. Verfahren nach Anspruch 6, ferner umfassend einen Schritt zum Auslösen einer Abfrage des Hauptspeichermoduls als Reaktion auf die Bestätigung.

8. Verfahren nach Anspruch 6, ferner umfassend einen Schritt des Übertragens einer Beendigungsnachricht der anfänglichen Anfrage als Reaktion auf die Bestätigung an das Cache-Speicher-Verwaltungsmoduls.

9. Multiprozessorsystem, umfassend:
• eine Vielzahl von Prozessormodulen (100, 110, 120, 130, 200), umfassend jeweils eine Vielzahl von Prozessoren (201, 202), wobei jeder Prozessor einem entsprechenden Cache-Speicher zugeordnet ist, und ein Cache-Speicher-Verwaltungsmodul (203),
• wobei das System ein Hauptspeichermodul (204) in Form eines gemeinsamen virtuellen Raums zwischen den Prozessormodulen (100, 110, 120, 130, 200) umfasst, wobei das Hauptspeichermodul (204) einen Hauptspeicher (205) umfasst, und
• ein Hauptspeicher-Verwaltungsmodul (206), wobei für den Zugriff auf ein Datenelement im System:
o das Cache-Speicher-Verwaltungsmodul zum Empfangen einer anfänglichen Anfrage für den Zugriff eines Prozessors auf ein Datenelement, zum ersten Senden von mindestens einer ersten Anfrage an mindestens einen Cache-Speicher in Bezug auf das Datenelement, und zum zweiten Senden, parallel zum ersten Senden, von mindestens einer zweiten Anfrage an das Hauptspeicher-Verwaltungsmodul in Bezug auf das Datenelement konfiguriert ist,
o das Hauptspeicher-Verwaltungsmodul für eine Überprüfung, welche die Abfrage des Hauptspeichers auslöst oder nicht, und für die Abfrage oder nicht des Hauptspeichers in Abhängigkeit von dieser Überprüfung konfiguriert ist,
o wobei eine verzeichnisbasierte Cache-Speicher-Verwaltung in dem System implementiert ist und wobei die Überprüfung durch das Hauptspeicher-Verwaltungsmodul das Abfragen eines Datenstatusverzeichnisses im Cache-Speicher umfasst,
o wobei das Hauptspeicher-Verwaltungsmodul über ein Verzeichnis verfügt, das ihm für jedes in dem Hauptspeicher gespeicherte Datenelement Informationen über den Status dieses Datenelements und über eine Liste von Protokollagenten liefert, die Zugriffsanfragen an Daten im Hauptspeicher senden können, die eine Kopie davon in ihren jeweiligen Cache-Speichern aufweisen, und
o wobei die Abfrage durchgeführt wird, wenn die Verzeichnisinformationen es ermöglichen, festzustellen, dass das Datenelement nicht im Cache-Speicher oder in einem Zustand vorhanden sind, der mit der anfänglichen Anfrage kompatibel ist.

## Claims

1. A method of accessing data in a multiprocessor system, said system comprising a plurality of processor modules (100, 110, 120, 130, 200) each comprising a plurality of processors (201, 202), each processor being associated with a respective cache memory, and a cache memory management module (203), said system comprising a central memory module (204), being in the form of a common virtual space between the processor modules (100, 110, 120, 130, 200), said central memory module (204) comprising a central memory (205) and a central memory management module (206), the method comprising the following steps of:
• receiving (300) by said cache memory management module, an initial request relative to access to data by a processor,
• first sending (302), by said cache memory management module, of at least a first request to at least one cache memory concerning said data,
• second sending (301), in parallel with the first sending, by said cache memory management module, of at least a second request to said central memory management module concerning said data,
• verifying (304), by said central memory management module, whether or not to initiate the querying of said central memory, and
• querying (309) or not, by said central memory management module, said central memory depending on said verification
• wherein a cache memory management by directory is implemented within said system and wherein said verification by said central memory management module comprises the consultation of a status directory of the data in cache memory,
• wherein said central memory management module comprises a directory which for each data stored in said central memory provides it with information about the status of that data and about a list of protocol agents able to send requests for access to data in central memory which have a copy thereof in their respective cache memories, and
• wherein said querying is carried out if the information from the directory makes it possible to determine that said data is not present in cache memory or in a status compatible with said initial request.

2. The method according to claim 1, further comprising a step of rejecting (306), by said central memory management module, said second request in the event of unavailability of said data within said central memory.

3. The method according to claim 1, wherein said second request is rejected, by said central memory management module, if it is determined that said data is available within at least one cache memory of said system.

4. The method according to claim 3, wherein said cache memory management module further waits to obtain said data from said at least one cache memory, in response to said first request.

5. The method according to one of claims 2 to 4, wherein said second request is rejected, by said central memory management module, if a conflict of access to said data by several processors is detected.

6. The method according to one of the preceding claims, further comprising a step of receiving, by said central memory management module, of a confirmation of said second request by said cache memory management module.

7. The method according to claim 6, further comprising a step of initiating a querying of said central memory module in response to said confirmation.

8. The method according to claim 6, further comprising a step of transmitting to said cache memory management module, a message to terminate said initial request in response to said confirmation.

9. A multiprocessor system comprising:
• a plurality of processor modules (100, 110, 120, 130, 200) each comprising a plurality of processors (201, 202), each processor being associated with a respective cache memory and a cache memory management module (203),
• said system comprising a central memory module (204) being in the form of a common virtual space between the processor modules (100, 110, 120, 130, 200), said central memory module (204) comprising a central memory (205), and
• a central memory management module (206), wherein, for access to data in the system:
∘ said cache memory management module is configured to receive an initial request relative to access to data by a processor, for a first sending of at least a first request to at least one cache memory concerning said data, and for a second sending, in parallel with the first sending, of at least a second request to said central memory management module concerning said data,
∘ said central memory management module is configured to verify whether or not to initiate the querying of said central memory and for querying or not said central memory depending on said verification
∘ wherein a cache memory management by directory is implemented within said system and wherein said verification by said central memory management module comprises the consultation of a status directory of the data in cache memory,
∘ wherein said central memory management module comprises a directory which for each data stored in said central memory, provides it with information about the status of that data and about a list of protocol agents able to send requests for access to data in central memory which have a copy thereof in their respective cache memories, and
∘ wherein said querying is carried out if the information from the directory makes it possible to determine that said data is not present in cache memory or in a status compatible with said initial request.
